# EUROPEAN PATENT APPLICATION

(11) **EP 4 822 961 A1**
(43) Date of publication of application: **14.10.2026**
(21) Application number: 24901014.1
(22) Date of filing: 03.12.2024
(51) Int. Cl.: H02K 7/114, H02K 7/112, H02K 7/00, B60T 13/74

(54) **MOTOR**

(30) Priority: 06.12.2023 KR 20230175465
(71) Applicant: LG Innotek Co., Ltd., Seoul 07796 (KR)
(72) Inventor: JUNG, Young Hwan, Seoul 07796 (KR); KIM, Hun Jung, Seoul 07796 (KR)
(74) Representative: Plasseraud IP
(86) International application number: PCT/KR2024/019551
(87) International publication number: WO 2025/121828

(57) **Abstract**

The present invention may provide a parking lock device including a braking motor including a shaft, and a locking part disposed on the shaft, wherein the shaft includes a first region, and a second region connected to the first region, the second region includes a hollow, and the locking part is positioned in the hollow.

## Description

### Field of the Invention

The present invention relates to a motor.

### Description of the Related Art

An electronic brake system for a vehicle is a device for braking a vehicle by operating a motor and a reducer and is a device that has an advantage of not only being lighter and more responsive but also being less restricted in an installation space in comparison to mechanical brake systems and is automatically operated using an actuator according to an operating state of a vehicle without a driver's manipulation.

The electronic brake system may include an electric parking brake function. Such a parking brake function can be implemented as a component that secures a braking force by expanding a shoe inside a drum in hat (DIH) of a wheel using tension generated by pulling a parking cable through rotation of a braking motor or secures a braking force by allowing spins to move a piston forward by the rotation of the motor to push a pad so as to be in close contact with a disc and the pad.

However, since a separate component needs to be added to add the parking brake function to the electronic brake system, there is a problem that more installation space is required and the configuration of related parts such as a reducer becomes complicated.

### SUMMARY OF THE INVENTION

Therefore, the present invention is directed to providing a motor capable of adding a parking brake function to an electric braking device with a relatively simple configuration.

The objects of the present invention are not limited to the above-described object, and other objects that are not described will be able to be clearly understood by those skilled in the art from the following description.

An embodiment may provide a motor including a shaft, a rotor coupled to the shaft, a stator disposed to correspond to the rotor, and a locking part disposed inside the shaft, wherein the locking part includes a stopper movable in an axial direction, and when a signal is applied to the locking part, the stopper is engaged with the shaft in an uneven coupling manner to restrict rotation of the shaft.

The shaft may include a groove therein, and the stopper includes a protrusion having a shape corresponding to the groove.

The locking part may include a housing disposed inside the shaft, a stopper disposed inside the housing and in contact with an inner surface of the shaft, a cylinder disposed outside the stopper, a coil disposed outside the stopper, and an elastic member disposed between the stopper and an inner wall of the housing.

The stopper may move linearly by an electromagnetic force generated from the coil, and
when a current is applied to the coil, the stopper moves and the protrusion is inserted into the groove so that the stopper restricts rotation of the shaft.

The shaft may include a first region and a second region connected to the first region,
the second region may include a hollow, and the locking part may be disposed in the hollow.

An outer diameter of the second region may be larger than an outer diameter of the first region.

At least a part of the locking part may be disposed to overlap the rotor and the stator in a radial direction.

The shaft may include a first wall and a second wall forming the hollow, the first wall may be disposed to face the locking part in the radial direction, the second wall may be disposed to face the locking part in the axial direction, and the groove may be disposed in the second wall.

The protrusion may form a contact region to be restricted in the rotation direction of the shaft.

The groove The protrusion may include a first contact surface and a second contact surface, and the first contact surface and the second contact surface may be formed to form an angle when viewed in the axial direction.

The groove may include a third contact surface and a fourth contact surface, the third contact surface and the fourth contact surface may be disposed to be inclined to form edges when viewed in the axial direction, the first contact surface and the third contact surface may be in contact with each other, and the second contact surface and the fourth contact surface may be in contact with each other so that the protrusion restricts rotation of the shaft.

The groove may be disposed to overlap an insulator of the stator in the radial direction.

The stopper may include a first part in which the protrusion is formed, and a second part in contact with the first part, and when a current is applied to the coil, the second part moves upward, the first part moves upward in conjunction with the upward movement of the second part, and in a state in which the protrusion is inserted into the groove, a part of the first part is caught on the second part so that rotation of the shaft is restricted.

According to one embodiment of the present invention, it is possible to simplify the configuration of the entire braking device by adding the parking braking function to the electric braking device.

According to one embodiment of the present invention, since a separate parking brake does not need to be provided by directly restraining a shaft of a braking motor, it is possible to reduce the installation space and reduce the number of parts.

According to one embodiment of the present invention, it is possible to minimize the size of the component for implementing the parking brake function by arranging the stopper to overlap the shaft in the axial direction.

According to one embodiment of the present invention, it is possible to reduce the axial length of the parking lock device by configuring the locking part inside the shaft.

### BRIEF DESCRIPTION OF THE DRAWINGS

FIG. 1 is a view illustrating a parking lock device according to an embodiment.
FIG. 2 is an exploded view illustrating the parking lock device illustrated in FIG. 1.
FIG. 3 is a perspective view illustrating a shaft.
FIG. 4 is a view illustrating a groove.
FIG. 5 is a view illustrating a locking part.
FIG. 6 is an exploded view illustrating the locking part illustrated in FIG. 5.
FIG. 7 is a side cross-sectional view illustrating the locking part illustrated in FIG. 5.
FIG. 8 is a view illustrating the shaft and the locking part.
FIG. 9 is a view illustrating a first part of a stopper.
FIG. 10 is a view illustrating a cylinder.
FIG. 11 is a view illustrating a second part of the stopper.
FIG. 12 is a view illustrating a wire.
FIG. 13 is a view illustrating a state of the stopper in a state in which a current is not applied to the locking part.
FIG. 14 is a view illustrating a moving state of the stopper in a state in which the current is applied to the locking part.
FIG. 15 is a view illustrating a state of the shaft restricted by the locking part.

### DETAILED DESCRIPTION OF THE INVENTION

Hereinafter, exemplary embodiments of the present invention will be described in detail with reference to the accompanying drawings.

However, the technical spirit of the present invention is not limited to some of the described embodiments, but may be implemented in various different forms, and one or more of the components among the embodiments may be used by being selectively coupled or substituted without departing from the scope of the technical spirit of the present invention.

In addition, terms (including technical and scientific terms) used in embodiments of the present invention may be construed as meaning that may be generally understood by those skilled in the art to which the present invention pertains unless explicitly specifically defined and described, and the meanings of the commonly used terms, such as terms defined in a dictionary, may be construed in consideration of contextual meanings of related technologies.

In addition, the terms used in the embodiments of the present invention are for describing the embodiments and are not intended to limit the present invention.

In the specification, a singular form may include a plural form unless otherwise specified in the phrase, and when described as "at least one (or one or more) of A, B, and C," one or more among all possible combinations of A, B, and C may be included.

In addition, terms such as first, second, A, B, (a), and (b) may be used to describe components of the embodiments of the present invention.

These terms are only for the purpose of distinguishing one component from another component, and the nature, sequence, order, or the like of the corresponding components is not limited by these terms.

In addition, when a first component is described as being "connected," "coupled," or "joined" to a second component, it may include a case in which the first component is directly connected, coupled, or joined to the second component, but also a case in which the first component is "connected," "coupled," or "joined" to the second component by other components present between the first component and the second component.

In addition, when the first component is described as being formed or disposed on "on (above) or below (under)" the second component, "on (above)" or "below (under)" may include not only a case in which two components are in direct contact with each other, but also a case in which one or more third components are formed or disposed between the two components. In addition, when described as "on (above) or below (under)," it may include the meaning of not only an upward direction but also a downward direction based on one component.

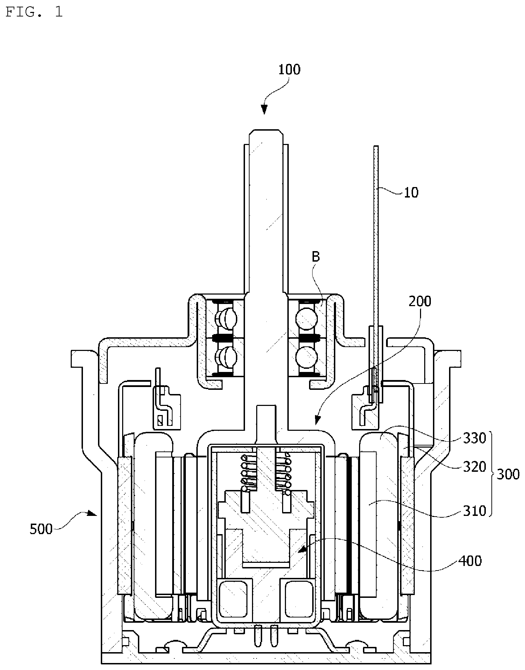

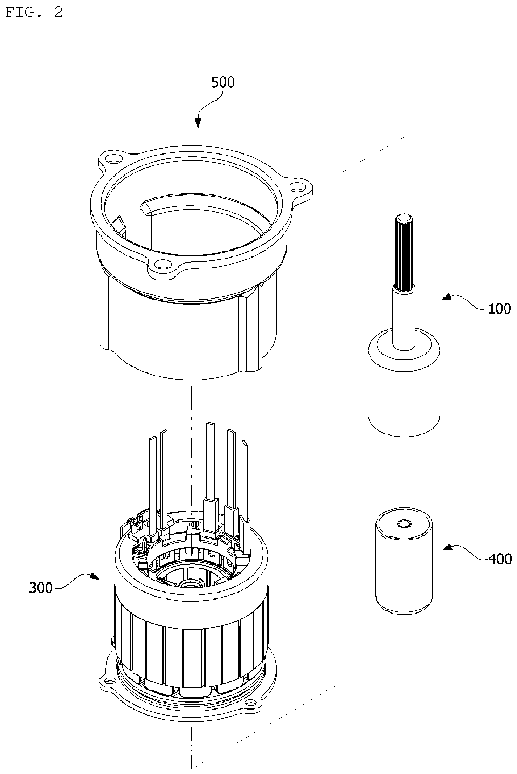

FIG. 1 is a view illustrating a parking lock device according to an embodiment, and FIG. 2 is an exploded view of the parking lock device illustrated in FIG. 1.

Referring to FIGS. 1 and 2, a parking lock device according to the embodiment may include a braking motor, a shaft 100, a rotor 200, a stator 300, a locking part 400, and a housing 500. The braking motor may include the shaft 100, the rotor 200, and the housing 500.

Hereinafter, an inside means a direction disposed toward the shaft 100 with respect to a radial direction of a motor, and an outside means a direction opposite to the inside and hereinafter, a circumferential direction and the radial direction are based on the axis center of the motor.

Hereinafter, the parking lock device is characterized by having a parking brake function in addition to a braking function of a vehicle.

Each of both ends of the shaft 100 may be rotatably supported by a bearing B in the axial direction. The shaft 100 may be disposed so that portions having different outer diameters are separated in the axial direction.

The rotor 200 is rotated by the electromagnetic interaction with the stator 300. The rotor 200 may be disposed corresponding to the stator 300 and disposed inside the stator 300. The rotor 200 may include a magnet.

The stator 300 is disposed outside the rotor 200. The stator 300 may include a stator core 310, an insulator 320, and a coil 330. The insulator 320 is mounted on the stator core 310. The coil 330 may be wound around the insulator 320. The insulator 320 is disposed between the coil 330 and the stator core 310 to electrically insulate the stator core 310 and the coil 330. The coil 330 causes the electromagnetic interaction with the magnet 220 of the rotor 200.

The locking part 400 is disposed inside the shaft 100. The locking part 400 is a device for implementing a parking brake function by restraining the shaft 100 not to rotate when a signal is applied when the vehicle is stopped. The locking part 400 is connected to a connector 10.

The housing 500 is disposed outside the stator 300.

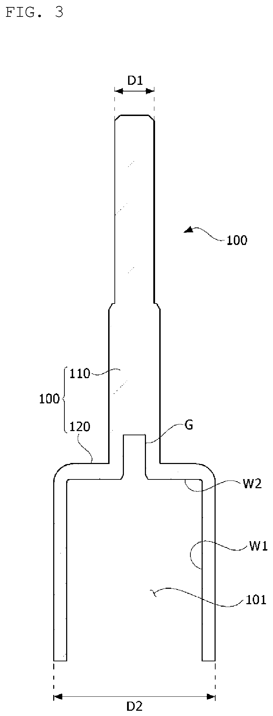

FIG. 3 is a side cross-sectional view illustrating the shaft 100.

Referring to FIG. 3, the shaft 100 may be partitioned into a first region 110 and a second region 120 in the axial direction.

An outer diameter D2 of the second region 120 may be larger than an outer diameter D1 of the first region 110. The second region 120 may include a hollow 101 therein. The hollow 101 is formed in the axial direction. One end of the second region 120 is open due to the hollow 101. The locking part 400 is positioned in the hollow 101. A part of the second region 120 may be disposed to overlap the rotor 200 and the stator 300 in the radial direction.

The first region 110 may be rotatably supported by a bearing.

The second region 120 includes a first wall W1 and a second wall W2 that form the hollow 101. The first wall W1 is disposed in the axial direction and is disposed to face the locking part 400 in the radial direction. The second wall W2 is disposed perpendicular to the first wall W1 and disposed toward the locking part 400 in the axial direction.

Meanwhile, the second region 120 includes a groove G. The groove G is formed concavely in the second wall W2. The groove G is formed to be engaged with the stopper 410 of the locking part 400.

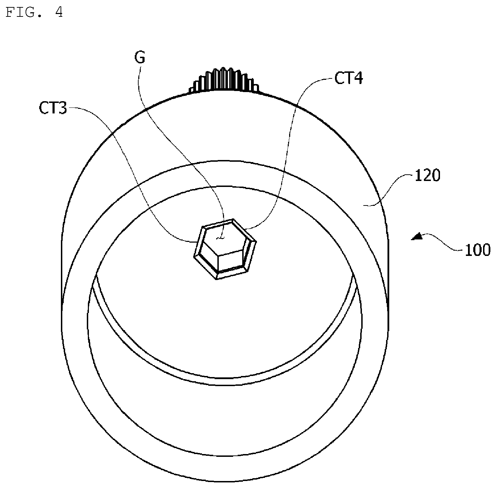

Fig. 4 is a view illustrating the groove G.

Referring to FIG. 4, the groove G may have a shape corresponding to a protrusion P of the stopper 410 to be engaged with the protrusion P and restrained in a rotation direction of the shaft 100. For example, the groove G may have a hexagonal shape when viewed in the axial direction. The groove G may be positioned in a central portion of the second wall W2.

The groove G may include a third contact surface CT3 and a fourth contact surface CT4 that are in contact with the projection P. The third contact surface CT3 and the fourth contact surface CT4 are disposed to be inclined to form edges when viewed in the axial direction The first contact surface (CT1) of the projection (P) contacts the third contact surface (CT3) of the groove (G), and the second contact surface (CT2) of the projection (P) contacts the fourth contact surface (CT4) of the groove (G), so that the projection (P) restrains the shaft (100). The groove G may be disposed to overlap the insulator 320 of the stator 300 in the radial direction.

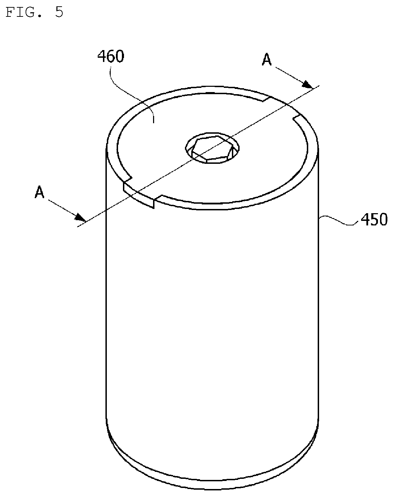

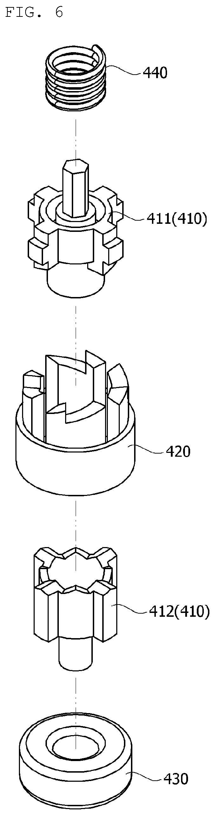

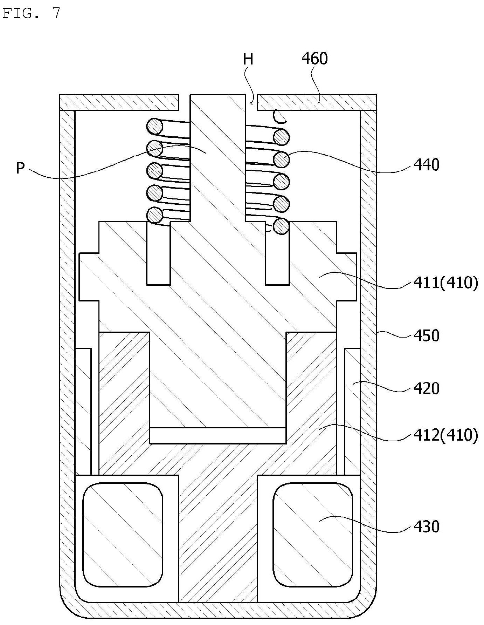

FIG. 5 is a view illustrating a locking part 400, FIG. 6 is an exploded view of the locking part 400 illustrated in FIG. 5, and FIG. 7 is a side cross-sectional view illustrating the locking part 400 illustrated in FIG. 5.

Referring to FIGS. 5 to 7, the locking part 400 may include a stopper 410, a cylinder 420, a coil 430, an elastic member 440, a case 450, and a cover 460.

The stopper 410 may include a first part 411 and a second part 412. The first part 411 is stacked on the second part 412 in the axial direction. When the second part 412 moves, the first part 411 is configured to move in conjunction therewith. The first part 411 includes the protrusion P. The second part 412 electromagnetically interacts with the coil 430 to move linearly along the inside of the cylinder 420.

The cylinder 420 is disposed inside the case 450.

The coil 430 may be disposed inside the case 450 and disposed at one side of the cylinder 420. The coil 430 is connected to an external connector.

The elastic member 440 is disposed between the inner wall of the case 450 and the first part 411 in the axial direction. The elastic member 440 may be a coil spring having a restoring force when stretching. Due to the restoring force of the elastic member 440, the first part 411 maintains a state of moving away from the shaft 100.

The case 450 may be a cylindrical member forming an accommodation space therein. The case 450 may include a cover 460 covering the open top.

The cover 460 may include a hole H through which a protrusion P protrudes.

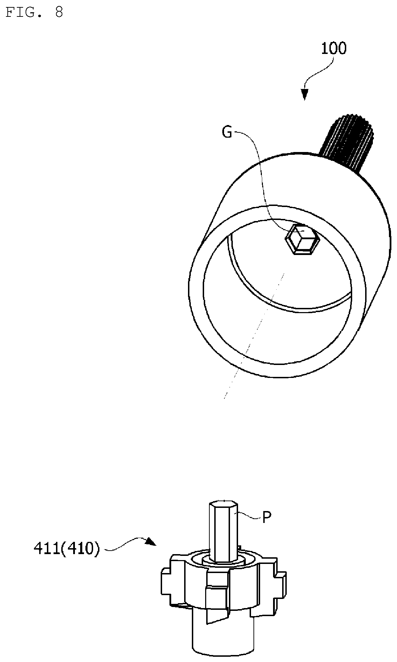

FIG. 8 is a view illustrating the shaft 100 and the locking part 400.

Referring to FIG. 8, the shaft 100 may include the groove G.

The stopper 410 may include the protrusion P formed on the first part 411. Since the stopper 410 of the locking part 400 moves in the axial direction so that the protrusion P is inserted into the groove G, the shaft 100 is restrained by the stopper 410 and does not rotate.

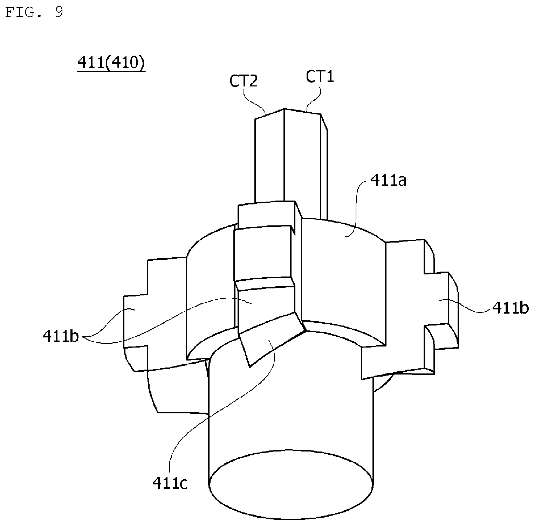

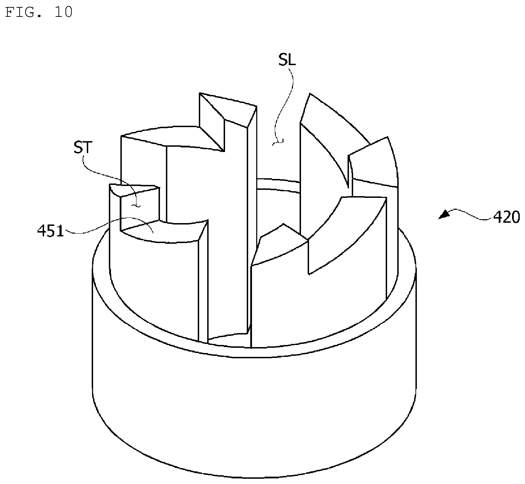

FIG. 9 is a view illustrating the first part 411 of the stopper 410, and FIG. 10 is a view illustrating the cylinder 420.

Referring to FIGS. 9 and 10, the first part 411 may include a cylindrical body 411a and a plurality of wing portions 411b protruding from an outer circumferential surface of the body 411a. The elastic member 440 is mounted on one side surface of the wing portion 411b. The wing portion 411b may include a first surface 411c disposed at the other side surface. The first surface 411c is a surface in contact with a second surface 451 disposed at one side end of the cylinder 420 or one side surface of the second part 412. The first surface 411c may be formed to be inclined.

The cylinder 420 includes the second surface 451 at the one side end. The cylinder 420 may be disposed to be inclined corresponding to the first surface 411c and implemented to form a step ST. The cylinder 420 may include a plurality of slots SL formed in the axial direction. The wing portion 412b of the stopper 410 may move along the slots SL.

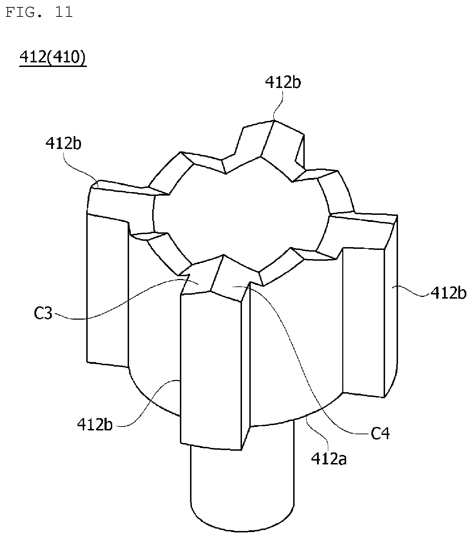

FIG. 11 is a view illustrating the second part 412 of the stopper 410.

Referring to FIG. 11, the second part 412 of the stopper 410 may include a cylindrical body 412a and a plurality of wing portions 412b protruding from an outer circumferential surface of the body 412a. The wing portion 411b may include a third surface C3 and a fourth surface C4 that are disposed on the other side surface thereof. The third surface C3 and the fourth surface C4 may be disposed to be inclined to form edges.

The third surface C3 or the fourth surface C4 are in contact with the first surface 411c of the first part 411.

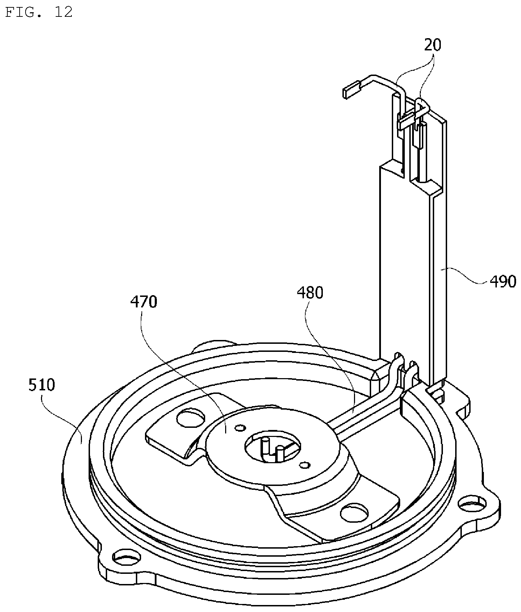

FIG. 12 is a view illustrating a wire 480.

Referring to FIG. 12, the locking part 400 may be connected to the wire 480 to receive power and exchange control signals through the wire 480.

The wire 480 is guided along a cover 510 and fixed by a wire holder 490 in the axial direction. The wire 480 is connected to a connector 20.

The wire holder 490 is disposed in the axial direction. The wire holder 490 may be disposed at an edge of the cover 510. The wire holder 490 may be an injection-molded product. A plate 470 is in contact with the cover 510.

A part of the plate 470 is disposed to be spaced apart from the cover 510. This is to secure a space for the wire 480.

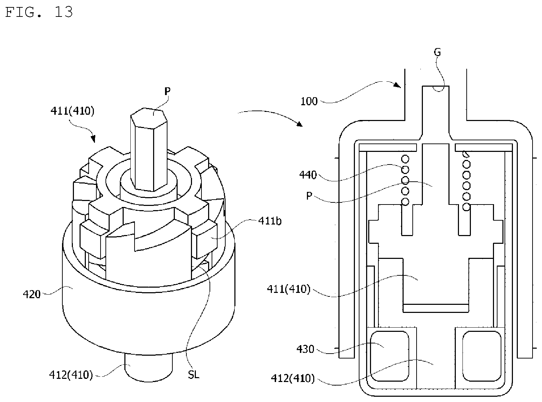

FIG. 13 is a view illustrating a state of the stopper 410 in a state in which no current is applied to the locking part 400.

As illustrated in FIG. 13, when the vehicle is driving or stopped and there is no separate signal, power is not supplied to the coil 430, and the protrusion P of the stopper 410 is positioned to be spaced apart from the groove G by the restoring force of the elastic member 440. The shaft 100 is not restrained by the stopper 410 and rotates due to the electromagnetic interaction between the rotor 200 and the stator 300.

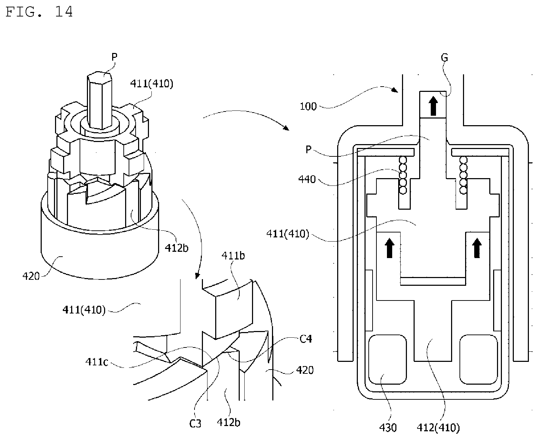

FIG. 14 is a view illustrating a moving state of the stopper 410 in a state in which a current is supplied to the locking part 400.

As illustrated in FIG. 14, when the vehicle is in a parked state, a signal related to the parking brake is input, and power is applied to the coil 430, the second part 412 of the stopper 410 moves linearly along the cylinder 420 by the electromagnetic interaction between the coil 430 and the stopper 410. The second part 412 of the stopper 410 moves linearly toward the shaft 100 while overcoming the restoring force of the elastic member 440. When the second part 412 moves, the first part 411 moves toward the shaft 100 by the second part 412 in a state in which one side surface of the second part 412 is in contact with the first surface 411c of the first part 411. In this case, since a surface in which the first surface 411c of the first part 411 is in contact with the second part 412 is disposed to be inclined, the first part 411 rotates and moves toward the shaft 100. In addition, in a state in which the groove G and the protrusion P are aligned, the protrusion P is inserted into the groove G.

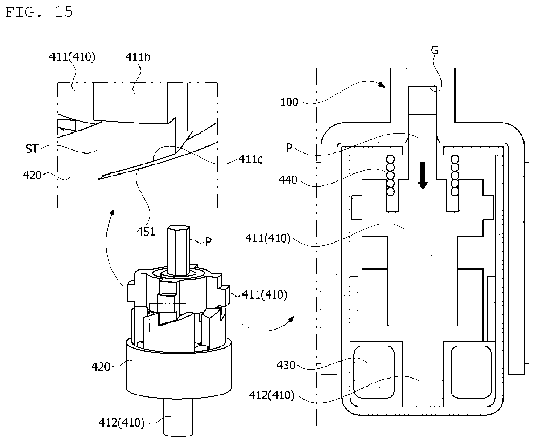

FIG. 15 is a view illustrating a state of the shaft 100 restricted by the locking part.

Referring to FIG. 15, when the application of the current supplied to the coil 430 is released, the second part 412 moves away from the shaft 100 and the first part 411 moves so that the first surface 411c of the first part 411 is caught on the step ST of the cylinder 420. Since the cylinder 420 is fixed in the rotation direction, the first part 411 is fixed to the cylinder 420 in the rotation direction. As a result, the shaft 100 is restrained by the first part 411 in a state in which the protrusion P is inserted into the groove G, thereby preventing rotation and performing the parking brake function.

The locking part 400 has an advantage that even when the application of the current supplied to the coil 430 is released, there is no need to continuously supply power to the locking part 400 to perform the parking brake function because the first part 411 is caught on the step ST.

In the case in which the restraint of the shaft 100 is released, when a current is re-applied to the coil 430, the second part 412 of the stopper 410 moves linearly toward the shaft 100 while overcoming the restoring force of the elastic member 440 and lifts the first part 411 so that the first part 411 is spaced apart from the cylinder 420. In this case, as the first part 411 rotates, the wing portion 411b of the first part 411 is aligned with a gap of the cylinder 420. In addition, when the current application to the coil 430 is released, the first part 411 moves downward, the protrusion P is removed from the groove G, and the stopper 410 is removed from the shaft 100, thereby releasing the restraint of the shaft 100.

The above-described embodiment is an exemplary embodiment in which the stopper 410 is moved by the electromagnetic interaction between the coil 430 and the stopper 410, and for example, this may be a solenoid structure. However, the present invention is not limited to the above-described exemplary embodiment, and other components in which the stopper 410 may repeat linear movement, such as a structure in which the stopper 410 moves using the shape deformation of a shape memory alloy, may be applied or modified.

For the above, a motor according to one preferred embodiment of the present invention has been specifically examined with reference to the attached drawings.

The above-described embodiment of the present invention should be understood in all respects as illustrative and not restrictive, and the scope of the present invention will be determined by the claims to be described below rather than the above-described detailed description. In addition, not only the meanings and scopes of the claims but also all changeable or modifiable forms derived from the equivalent concept thereof should be construed as being included in the scope of the present invention.

## Claims

1. A motor comprising:
a shaft;
a rotor coupled to the shaft;
a stator disposed to correspond to the rotor; and
a locking part disposed inside the shaft,
wherein the locking part includes a stopper movable in an axial direction, and
when a signal is applied to the locking part, the stopper is engaged with the shaft in an uneven coupling manner to restrict rotation of the shaft.

2. The motor of claim 1, wherein the shaft includes a groove therein, and
the stopper includes a protrusion having a shape corresponding to the groove.

3. The motor of claim 2, wherein the locking part includes a housing disposed inside the shaft, a stopper disposed inside the housing and in contact with an inner surface of the shaft, a cylinder disposed outside the stopper, a coil disposed outside the stopper, and an elastic member disposed between the stopper and an inner wall of the housing.

4. The motor of claim 3, wherein the stopper moves linearly by an electromagnetic force generated from the coil, and
when a current is applied to the coil, the stopper moves and the protrusion is inserted into the groove so that the stopper restricts rotation of the shaft.

5. The motor of claim 1, wherein the shaft includes a first region and a second region connected to the first region,
the second region includes a hollow, and
the locking part is disposed in the hollow.

6. The motor of claim 1, wherein an outer diameter of the second region is larger than an outer diameter of the first region.

7. The motor of claim 2, wherein at least a part of the locking part is disposed to overlap the rotor and the stator in a radial direction.

8. The motor of claim 2, comprising a first wall and a second wall forming the hollow of the shaft,
wherein the first wall is disposed to face the locking part in a radial direction,
the second wall is disposed to face the locking part in an axial direction, and
the groove is disposed in the second wall.

9. The motor of claim 8, wherein the protrusion forms a contact region to be restricted in a rotation direction of the shaft.

10. The motor of claim 2, wherein the protrusion includes a first contact surface and a second contact surface, and
the first contact surface and the second contact surface are formed to form an angle when viewed in the axial direction.

11. The motor of claim 10, wherein the groove includes a third contact surface and a fourth contact surface,
the third contact surface and the fourth contact surface are formed to form an angle when viewed in the axial direction,
the first contact surface and the third contact surface are in contact with each other, and the second contact surface and the fourth contact surface are in contact with each other, so that the protrusion restricts rotation of the shaft.

12. The motor of claim 2, wherein the groove is disposed to overlap an insulator of the stator in a radial direction.

13. The motor of claim 2, wherein the stopper includes a first part in which the protrusion is formed, and a second part in contact with the first part,
when a current is applied to the coil, the second part moves upward, and the first part moves upward in conjunction with the upward movement of the second part, and
in a state in which the protrusion is inserted into the groove, a part of the first part is caught on the second part to restrict rotation of the shaft.
